# EUROPEAN PATENT APPLICATION

(11) **EP 4 592 009 A2**
(43) Date of publication of application: **30.07.2025**
(21) Application number: 25154310.4
(22) Date of filing: 28.01.2025
(51) Int. Cl.: B22F 10/68, B22F 10/73, B22F 12/30, B22F 12/82, B29C 64/245, B29C 64/35, B29C 64/357, B33Y 30/00, B33Y 40/00, B33Y 40/20, B22F 10/14

(54) **AUTOMATED DE-POWDERING OF ADDITIVE MANUFACTURING BUILD**

(30) Priority: 29.01.2024 US 202463626142 P
(71) Applicant: General Electric Company, Cincinnati, Ohio 45215 (US)
(72) Inventor: McClain, David, West Chester, 45069 (US); Raabe, Benjamin H., West Chester, 45069 (US)
(74) Representative: Hafner & Kohl PartmbB

(57) **Abstract**

An automated de-powdering system [150, 260, or 300] includes a build box [104] defined by a build plate [140] and a plurality of sidewalls [106] where the build plate [140] and the plurality of sidewalls [106] define a build chamber [108] configured to contain an additive manufacturing build [110] comprising one or more objects [130] disposed within a powder build material [114]. The build plate [140] includes at least one passageway [210] extending from a top side [200] to ae bottom side [202] of the build plate [140]. The passageway [210] is defined by at least one passageway sidewall [240] having at least one nozzle [242] to direct a fluid into the build chamber [108] to separate at least a portion of the powder build material [114] from the one or more objects [130]. At least one fluid source [244] is fluidically coupled to the at least one nozzle [242] and is actuatable to supply the fluid to the at least one nozzle [242].

## Description

### CROSS-REFERENCE TO RELATED APPLICATIONS

This application is a non-provisional application claiming the benefit of priority under 35 U.S.C. § 119(e) to U.S. Provisional Application No. 63/626,142, filed January 29, 2024, which is hereby incorporated by reference in its entirety.

### FIELD

The present disclosure generally pertains to additive manufacturing machines and systems, and more particularly, systems and methods for automated de-powdering of an additive manufacturing build.

### BACKGROUND

Three-dimensional objects may be additively manufactured using an additive manufacturing machine. One type of additive manufacturing is binder jetting. In binder jet additive manufacturing, a liquid binder is used to join particles of a powder to form a three-dimensional object. For example, a controlled pattern of the liquid binder is applied to successive layers of the powder in a powder bed such that the layers of the material adhere to one another to form a three-dimensional green part. Through subsequent processing (e.g., sintering), the three-dimensional green part can be formed into a finished three-dimensional part.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 schematically depicts an exemplary additive manufacturing system or machine in accordance with an embodiment of the present disclosure.
FIG. 2 schematically depicts an automated de-powdering system in accordance with an embodiment of the present disclosure.
FIG. 3 schematically depicts an embodiment of a build plate used in the de-powdering system of FIG. 2 in accordance with an embodiment of the present disclosure.
FIG. 4 schematically depicts an enlarged view of a portion of the de-powdering system of FIGS. 1-3 in accordance with an embodiment of the present disclosure.
FIG. 5 schematically depicts an enlarged view of a portion of the build plate used in the de-powdering system of FIGS. 1-4 in accordance with an embodiment of the present disclosure.
FIG. 6 schematically depicts an automated de-powdering system in accordance with another embodiment of the present disclosure.
FIG. 7 is a schematic diagram depicting an enlarged view of a portion of another automated de-powdering system according to exemplary embodiments of the present disclosure.
FIG. 8 is a schematic diagram depicting another view of the automated de-powdering system of FIG. 7 according to exemplary embodiments of the present disclosure.
FIG. 9 depicts a method for automated de-powdering of an additive manufacturing build in accordance with an exemplary aspect of the present disclosure.
FIG. 10 is a block diagram depicting an example computing system according to example embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, or C" refers to only A, only B, only C, or any combination of A, B, and C.

As used herein, the terms "first," "second," and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets, laser jets, and binder jets, Stereolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 micrometers (µm) and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as needed depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing constraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways with integral mounting features. In addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved functionality and reliability.

Unlike laser melting and laser sintering additive manufacturing techniques, which heat the material to consolidate and build layers of the material to form a printed part (e.g., metal or ceramic part), binder jetting uses a chemical binder to bond particles of the material into layers that form a green body of the printed part. As defined herein, the green body of the printed part is intended to denote a printed part that has not undergone heat treatment to remove the chemical binder. Chemical binding has been used in sand molding techniques to bond sand particles and form a sand mold that can be used to fabricate other parts. Similar to sand molding, in binder jet printing, the chemical binder is successively deposited into layers of powder to print the part. For example, the chemical binder (e.g., a polymeric adhesive) may be selectively deposited onto a powder bed in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering) to form a consolidated part. In certain post printing processes, the green body part may undergo a de-powdering process. The de-powdering process removes portions of the powder that have not been bound (e.g., adhered) by the chemical binder. However, de-powdering of the green body part is generally done before heat treating (e.g., pre-sintering) the green body part. Heat treating the green body part removes the chemical binder and builds handling strength. Therefore, during a de-powdering processes, the green body part may have insufficient handling strength and be susceptible to damage.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

The present disclosure generally provides an apparatus and technique for automated de-powdering of an additively manufactured three-dimensional object. In exemplary embodiments, the de-powdering technique includes de-powdering of the additively manufactured objects within the build box used to form the objects. Embodiments of the present disclosure utilize a pressurized atmosphere within the build box during the de-powdering process and utilize one or more techniques to separate unbound powder build material from the additively manufactured objects such as introducing a fluid injection through the build plate, actuating one or more vibration mechanisms, and using a pressurized gas flow from above the additive manufacture build to force the unbound powder build material through passageways formed in the build plate. Embodiments of the present disclosure may also utilize a sacrificial support system formed during the printing process to support and stabilize the additively manufactured objects during powder separation and removal. Thus, exemplary embodiments of the present disclosure decrease the time required for de-powdering (e.g., compared to de-powdering performed manually) and can accommodate complex build orientations and objects.

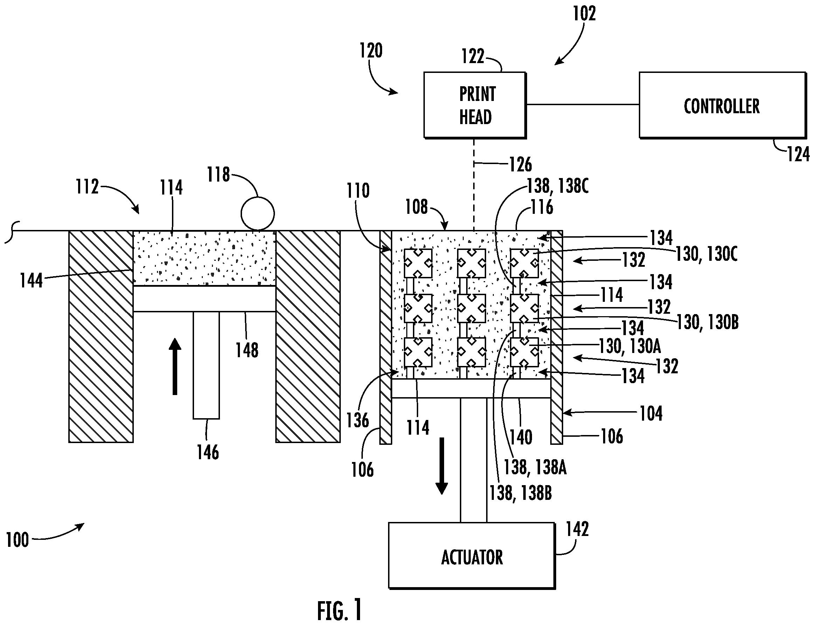

Referring now to FIG. 1, the presently disclosed subject matter will now be described in further detail. FIG. 1 schematically depicts an exemplary additive manufacturing system 100 according to the present disclosure. The additive manufacturing system 100 may include one or more additive manufacturing machines 102. In the illustrated embodiment, the additive manufacturing machine 102 comprises a binder jet additive manufacturing machine 102. In the illustrated embodiment, the additive manufacturing machine 102 includes a build box 104 defined by a plurality of sidewalls 106 and defining a build chamber 108 for an additive manufacturing build 110. The additive manufacturing machine 102 includes a powder source 112 configured to deposit one or more layers of a powder build material 114 onto a build surface 116 within the build box 104. For example, the powder source 112 includes a spreader or recoater 118 configured to be movable across the powder source 112 to spread one or more layers of the powder build material 114 onto the build surface 116.

In the illustrated embodiment, the additive manufacturing machine 102 includes a print system 120 including at least one print head 122 movable across the build surface 116, and a controller 124 communicatively coupled to the print head 122. The print head 122 is configured to dispense a binder 126 to the one or more layers of the powder build material 114 (e.g., on the build surface 116). The controller 124 is configured to control the movement of the print head 122 and the delivery of the binder 126 in a defined two-dimensional pattern to form one or more three-dimensional parts or objects 130 on a layer-by-layer basis. As depicted in FIG. 1, the one or more objects 130 may be formed or delineated into one or more build layers 132 vertically stacked and nested with one or more foundation layers 134 disposed vertically adjacent or between the one or more build layers 132. The one or more build layers 132 include the one or more objects 130 suspended within the powder build material 114, and the one or more foundation layers 134 include the powder build material 114 being devoid of the one or more objects 130.

In FIG. 1, the build box 104 also comprises a build plate 140 defining a lower boundary of the build chamber 108. The build plate 140 is vertically movable within the build box 104 by an actuator 142. In operation, the actuator 142 lowers the build plate 140 incrementally as each layer of the powder build material 114 is distributed across the build surface 116.

In the illustrated embodiment, the powder source 112 comprises a supply chamber 144 containing a supply of the powder build material 114. A piston 146 may be actuatable to elevate a supply chamber plate 148 during operation of the additive manufacturing machine 102. As the supply chamber plate 148 is elevated, a portion of the powder build material 114 is forced out of the supply chamber 144, and the recoater 118 sequentially distributes thin layers of the powder build material 114 onto the build surface 116 above the build box 104.

As described above, binder jetting uses a chemical binder to bond particles of the powder build material 114 into layers that form a green body of the printed object 130. After printing, the object 130 may undergo a de-powdering process to remove portions of the powder build material 114 that have not been bound (e.g., adhered) by the chemical binder (e.g., generally surrounding the green body of the printed object 130). However, de-powdering of the green body of the printed object 130 is generally done before heat treating (e.g., pre-sintering) of the green body of the printed object 130. Heat treating the green body removes the chemical binder and builds handling strength. Therefore, during a de-powdering process, the green body of the printed object 130 may have insufficient handling strength and be susceptible to damage.

In the illustrated embodiment, the additive manufacturing build 110 includes a sacrificial support system 136 configured to stabilize or support the one or more objects 130 within the powder build material 114. For example, in exemplary embodiments, the sacrificial support system 136 includes one or more sacrificial supports 138. The one or more sacrificial supports 138 are formed during the printing process (i.e., bonded particles of the powder build material 114 extending one or more layers also in a green state) such that each sacrificial support 138 is connected to or supports at least one of the one or more objects 130 within the powder build material 114. For example, in the illustrated embodiment, a sacrificial support 138A extends from the build plate 140 to an object 130A, a sacrificial support 138B extends from the object 130A to an object 130B, and a sacrificial support 138C extends from the object 130B to an object 130C. In the illustrated embodiment, the sacrificial supports 138 are generally located within the foundation layers 134 and extend vertically with respect to the one or more objects to stabilize or support the one or more objects 130 in a vertical direction. However, it should also be understood that the sacrificial support system 136 may additionally or alternatively include horizontally-oriented sacrificial supports 138 (e.g., extending between one or more of the objects 130 in a plane parallel to the build plate 140) or sacrificial supports 138 disposed at other orientations within the additive manufacturing build 110. The sacrificial supports 138 are generally formed having a cross-sectional area providing support to the one or more objects 130 within the powder build material 114 while also being easily removed or detached from the one or more objects 130 after the printing process. Thus, for example, the sacrificial supports 138 may generally have a small cross-sectional area as compared to the one or more objects 130 such that detachment of the sacrificial supports 138 from the one or more objects requires minimal effort, such as minor machining, cutting, or manual separation of the object 130 from the sacrificial support 138.

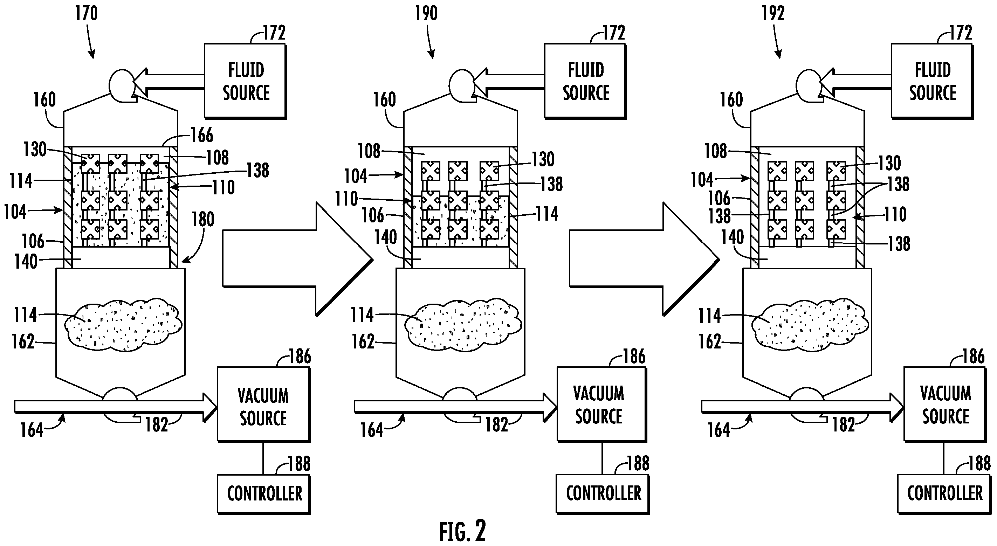

FIG. 2 is a schematic diagram depicting a de-powdering system 150 according to exemplary embodiments of the present disclosure. In the illustrated embodiment, the de-powdering system 150 includes a cover 160, a hopper 162, and a transport mechanism 164. In exemplary embodiments, at a stage 170 of a de-powdering process depicted in FIG. 2, the build box 104, including the build plate 140, is loaded into the de-powdering system 150 such that the hopper 162 is disposed below the build plate 140. The cover 160 is coupled to or disposed over the build box 104 to seal or close an upper portion 166 of the build box 104. The cover 160 is fluidically coupled to a fluid source 172. The fluid source 172 may be a source of a pressurized gas such that actuation of the fluid source 172 causes a fluid to be injected into the build chamber 108 via the cover 160. The fluid may be any type of fluid such as, by way of non-limiting example, a gas (including compressed gas) such as atmospheric air, nitrogen gas, or an inert gas (e.g., argon). Thus, the cover 160 seals the build box 104 such that a controlled environment, such as by way of non-limiting examples, a pressurized environment, an inert environment, or both, may be maintained within the build box 104 during a de-powdering process.

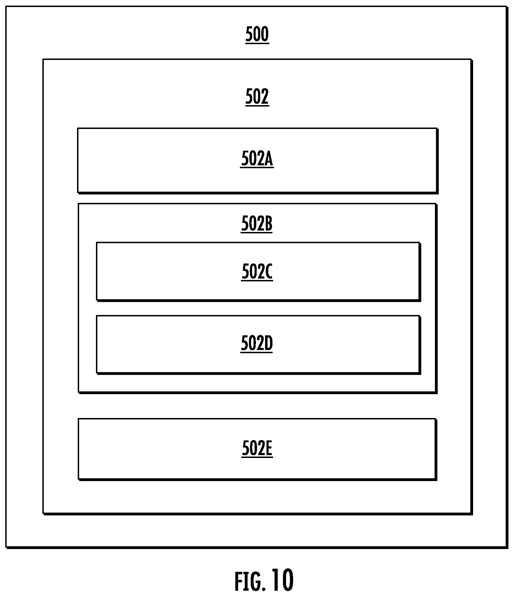

The hopper 162 may be any type of collection device or chamber configured to collect unbound powder build material 114 that exits the build box 104 though a lower portion 180 of the build box 104. For example, in the illustrated embodiment, the lower portion 180 of the build box 104 is coupled or secured to the hopper 162 such that the hopper 162 creates a seal with the one or more sidewalls 106 of the build box 104. In exemplary embodiments, the transport mechanism 164 may include a suction tube 182 fluidically coupled to a lower portion 184 of the hopper 162 and fluidically coupled to a vacuum source 186 such as, by way of non-limiting example, a suction pump. Actuation of the vacuum source 186 causes a vacuum to be applied or drawn through the suction tube 182 to suction or draw the unbound powder build material 114 collected in the hopper 162 from the hopper 162 and convey the unbound powder build material 114 away from the hopper 162 (e.g., to a secondary collection location). Actuation or control of the vacuum source 186 may be automatically controlled, such as by a controller 188. The controller 188 may be configured similar to exemplary computing devices of the computing system 500 described below with reference to FIG. 10. Actuation of the fluid source 172 may also be automatically controlled by the controller 188 or by another computing system configured similar to exemplary computing devices of the computing system 500 described below with reference to FIG. 10.

In FIG. 2, a stage 190 of the de-powdering process subsequent to the stage 170, and a stage 192 of the de-powdering process subsequent to the stage 190, are depicted. In operation, at least one or more of the fluid entering the build box 104 via the cover 160 via the fluid source 172, along with gravitational forces, the weight of the unbound powder build material 114, and the vacuum being drawn through the hopper 162 via the vacuum source 186, cause the unbound powder build material 114 to exit the lower portion 180 of the build box 104 and be collected by the hopper 162. Additionally, as will be further described below, one or more additional mechanisms of the de-powdering system 150 may be used to facilitate the separation of the unbound powder build material 114 from the one or more objects 130. As depicted in stages 190 and 192 of the de-powdering process, the sacrificial supports 138 support or stabilize the one or more objects 130 within the build chamber 108 during unbound powder build material 114 removal.

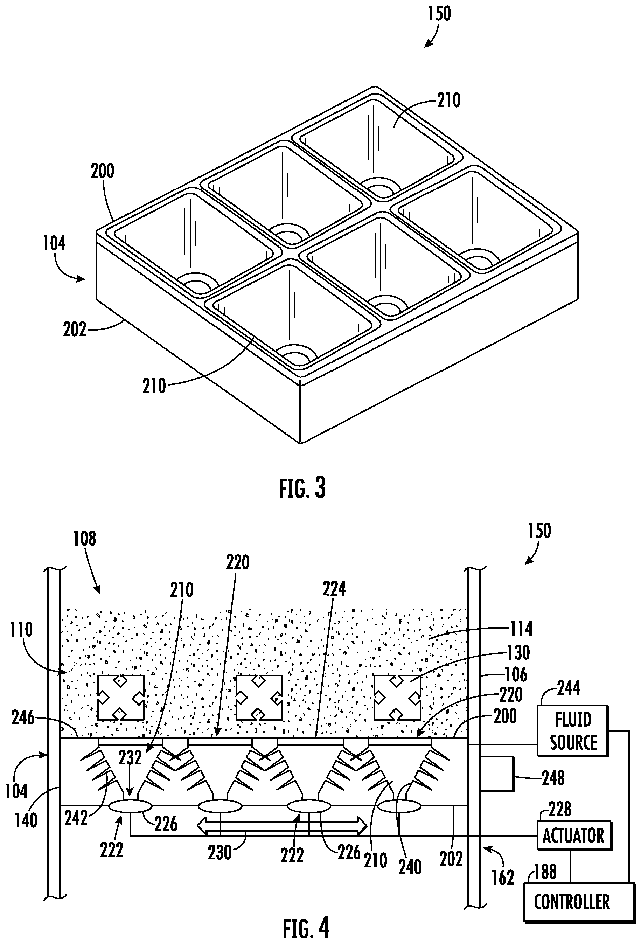

FIG. 3 is a schematic diagram depicting at least a portion of the build plate 140 depicted in FIGS. 1 and 2 used in the de-powdering system 150 according to exemplary embodiments of the present disclosure. In the illustrated embodiment, the build plate 140 includes a top side 200 and a bottom side 202, where the bottom side 202 is opposite the top side 200. The top side 200 faces the build chamber 108 (FIGS. 1 and 2), and the bottom side 202 faces the hopper 162 (FIG. 2). In exemplary embodiments, the build plate 140 includes one or more passageways 210 that extend through the build plate 140 from the top side 200 to the bottom side 202. The one or more passageways 210 are openings in the build plate 140 that enable the passage of the unbound powder build material 114 (FIGS. 1 and 2) to flow through the build plate 140. In exemplary embodiments, one or more of the one or more passageways 210 are funnel-shaped passageways 210 such that the funnel-shaped passageway 210 has a larger or wider opening at the top side 200 of the build plate 140 than the opening at the bottom side 202 of the build plate 140. In the illustrated embodiment, the funnel-shaped passageways 210 are in the form of an inverted pyramid. However, it should be understood that other funnel-shaped geometries may be used. It should also be understood that one or more of the passageways 210 may be configured as linear passageways 210 or be otherwise geometrically configured. The quantity of passageways 210, the spacing between passageways 210, and the height of the passageways, or the height of various internal surfaces of the passageways 210, may be configured to accommodate various aspects of the powder build material 114 to allow the powder build material 114 to be collected by and pass through the passageways 210.

FIG. 4 is a schematic diagram depicting an enlarged view of a portion of the de-powdering system 150 according to exemplary embodiments of the present disclosure. In the illustrated embodiment, the de-powdering system 150 also includes one or more screens 220 and a shutter assembly 222. In exemplary embodiments, the one or more screens 220 at least partially extend over the one or more passageways 210. The one or more screens 220 may be a mesh structure or a wall structure containing a plurality of opening or apertures to enable the powder build material 114 to flow through the one or more passageways 210 while preventing the one or more objects 130 from entering or passing through the passageways 210. Thus, in exemplary embodiments, after separation and removal of the unbound powder build material 114 from the one or more objects 130, the one or more objects 130 are retained within the build box 104. In the illustrated embodiment, the one or more screens 220 are disposed proximate the top side 200 of the build plate 140 extending over or across the one or more passageways 210. In the illustrated embodiment, the one or more screens 220 include one or more screen elements 224 such that each screen element 224 is disposed over or extends across a particular passageway 210. However, it should be understood that one or more of the screen elements 224 may extend over multiple passageways 210, or a single screen element 224 may extend over all passageways 210.

In exemplary embodiments, the shutter assembly 222 is configured to be movable between an open position and a closed position with respect to the one or more passageways 210 so that the one or more passageways 210 may be correspondingly open or closed (or at least partially open or partially closed). In the illustrated embodiment, the shutter assembly 222 includes one or more shutter elements 226 configured to be movable between an open position and a closed position with respect to the one or more passageways 210. In exemplary embodiments, the one or more shutter elements 226 may include a cover, plate, or other type of structure that is disposed over or extends across a particular passageway 210. However, it should be understood that one or more of the shutter elements 226 may extend over multiple passageways 210. In the illustrated embodiment, the one or more shutter elements 226 are disposed proximate the bottom side 202 of the build plate 140. However, it should be understood that the one or more shutter elements 226 may be otherwise located with respect to the passageways 210. In exemplary embodiments, the one or more shutter elements 226 may be coupled together so that the one or more shutter elements 226 are movable together as a unit. In exemplary embodiments, the shutter assembly 222 is coupled to an actuator 228 such that actuation of the actuator 228 causes movement of the one or more shutter elements 226 in the directions indicated by an arrow 230. Actuation or control of the actuator 228 may be automatically controlled, such as by the controller 188 or by another computing system configured similar to exemplary computing devices of the computing system 500 described below with reference to FIG. 10. In FIG. 4, the one or more shutter elements 226 are depicted in a closed position with respect to the one or more passageways 210, which prevent the powder build material 114 from passing through the build plate 140. Correspondingly, actuation of the actuator 228 to move the one or more shutter elements 226 to an open position with respect to the one or more passageways 210 results in an exit port 232 of respective passageways 210 proximate the bottom side 202 of the build plate 140 to be uncovered or opened, which enables the passage of the powder build material 114 through the build plate 140 via the one or more passageways 210 and into the hopper 162.

In exemplary embodiments, each passageway 210 in the build plate 140 is defined by one or more passageway sidewalls 240 extending at least partially between the top side 200 and the bottom side 202 of the build plate 140. In exemplary embodiments, one or more of the passageway sidewalls 240 include one or more nozzles 242. The one or more nozzles 242 are fluidically coupled to a fluid source 244, and the fluid source 244 is actuatable to provide a fluid to the one or more nozzles. Actuation or control of the vacuum source fluid source 244 may be automatically controlled, such as by the controller 188 or by another computing system configured similar to exemplary computing devices of the computing system 500 described below with reference to FIG. 10. The fluid source 244 may be a source of a pressurized gas such that actuation of the fluid source 244 causes a fluid to be injected into the build chamber 108 via the one or more nozzles 242. The fluid may be any type of fluid such as, by way of non-limiting example, a gas (including compressed gas) such as atmospheric air, nitrogen gas, or an inert gas (e.g., argon). Although the fluid source 244 is depicted as being distinct from the fluid source 172 (FIG. 2), it should be understood that a single fluid source may be fluidically coupled to the one or more nozzles 242 and the cover 160 (FIG. 2). In exemplary embodiments, the one or more nozzles 242 are configured having an angular orientation such that the one or more nozzles 242 direct or inject the fluid upwardly into the build chamber 108. For example, in exemplary embodiments, the one or more nozzles 242 are oriented perpendicular to the passageway sidewall 240. Thus, in exemplary embodiments, the one or more nozzles 242 are disposed having a non-parallel orientation with respect to a build plane 246 of the build plate 140. Thus, in operation, actuation of the fluid source 244 causes fluid to be ejected from the one or more nozzles 242 toward and into the build box 104 to fluidize or separate the unbound powder build material 114 from the one or more objects 130. The unbound powder build material 114 exits the build chamber 108 through the one or more passageways 210. In exemplary embodiments, the de-powdering system 150 may also include one or more agitation mechanisms 248. The one or more agitation mechanisms 248 may be coupled to or disposed proximate the build box 104 to induce vibrations to the additive manufacturing build 110 to facilitate the separation of the powder build material 114 from the one or more objects 130. The one or more agitation mechanisms 248 may include one or more ultrasonic transducers to induce vibrations into the additive manufacturing build 110. However, it should be understood that the one or more agitation mechanisms 248 may alternatively or additionally include pneumatic transducers or other types of contact or non-contact vibration inducing mechanisms. Actuation or control of the agitation mechanisms 248 may be automatically controlled, such as by the controller 188 or by another computing system configured similar to exemplary computing devices of the computing system 500 described below with reference to FIG. 10.

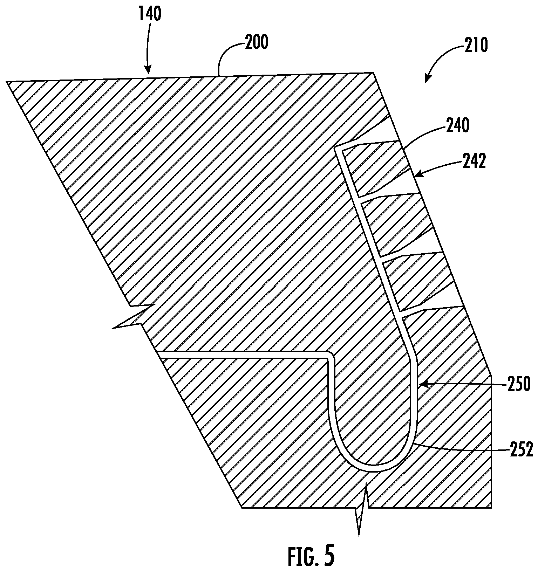

FIG. 5 is a schematic diagram depicting an enlarged view of a portion of the build plate 140 according to exemplary embodiments of the present disclosure. In exemplary embodiments, the build plate 140 includes at least one fluid line 250 fluidically coupled to the one or more nozzles 242. The fluid line 250 is fluidically coupled to the fluid source 244 (FIG. 5) such that the fluid line 250 delivers the fluid from the fluid source 244 (FIG. 5) to the one or more nozzles 242. In the illustrated embodiment, at least a portion of the fluid line 250 is disposed within the build plate 140. In exemplary embodiments, the fluid line 250 also includes a trap portion 252. The trap portion 252 is configured to trap, collect, or substantially prevent the powder build material 114 (FIGS. 1, 2, and 4) that may otherwise enter the one or more nozzles 242 from migrating through the fluid line 250 or potentially blocking the fluid line 250. The trap portion 252 may be configured similar to an S-trap or P-trap used in conventional plumbing applications. However, it should be understood that the trap portion 252 may be otherwise configured. In the illustrated embodiment, the trap portion 252 is disposed within the build plate 140. However, it should be understood that the trap portion 252 may also be located external to the build plate 140.

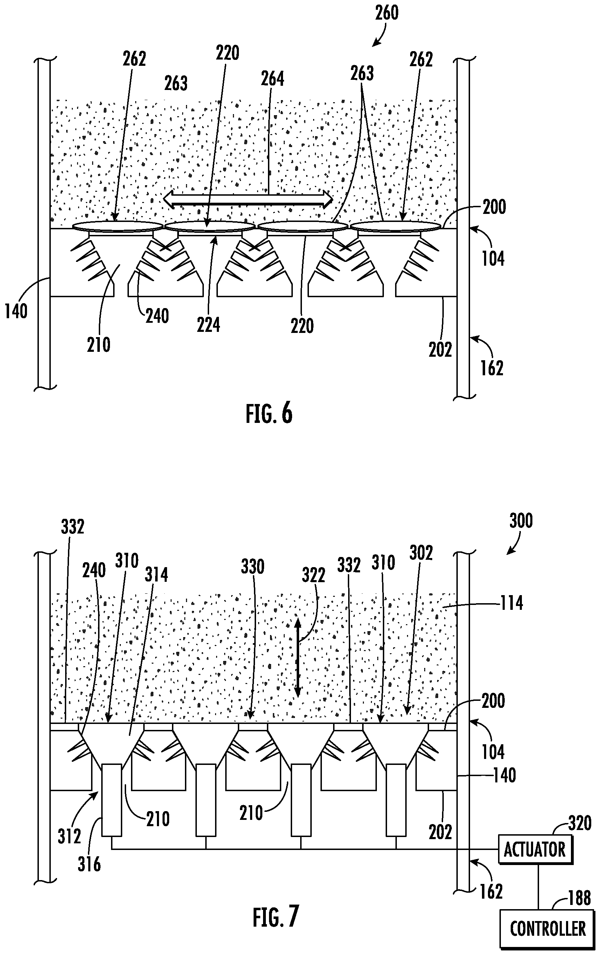

FIG. 6 is a schematic diagram depicting an enlarged view of a portion of another de-powdering system 260 according to exemplary embodiments of the present disclosure. The de-powdering system 260 may be configured similarly to the de-powdering system 150 (FIGS. 1-5). In the illustrated embodiment, the shutter assembly 222 (FIG. 4) is replaced by a shutter assembly 262. The shutter assembly 262 may be configured similarly to the shutter assembly 222 (FIG. 4) such that the shutter assembly 262 includes one or more shutter elements 263. The one or more shutter elements 263 may be formed similarly to the one or more shutter elements 226 (FIG. 4). In the illustrated embodiment, the one or more shutter elements 263 are disposed proximate the top side 200 of the build plate 140 such that the one or more screens 220 are disposed between the one or more shutter elements 263 and the one or more passageways 210. Similar to as described above in connection with the de-powdering system 150 (FIGS. 1-5), the one or more shutter elements 263 are movable with respect to the one or passageways 210 in directions indicated by an arrow 264 between an open position and a closed position to allow or block, respectively, passage of the powder build material 114 through the one or more passageways 210. It should be understood that the one or more shutter elements 263 may coupled to an actuator (e.g., similar to the actuator 228 (FIG. 4)) that is actuatable to cause movement of the one or more shutter elements 263 with respect to the one or more passageways 210.

FIG. 7 is a schematic diagram depicting an enlarged view of a portion of another de-powdering system 300 according to exemplary embodiments of the present disclosure. The de-powdering system 300 may be configured similarly to the de-powdering system 150 (FIGS. 1-5). In the illustrated embodiment, the shutter assembly 222 (FIG. 4) is replaced by a shutter assembly 302. Similar to the shutter assembly 222 (FIG. 4), the shutter assembly 302 is configured to be movable between an open position and a closed position with respect to the one or more passageways 210 so that the one or more passageways 210 may be correspondingly open or closed (or at least partially open or partially closed). In the illustrated embodiment, the shutter assembly 302 includes one or more shutter elements 310 configured to be movable between an open position and a closed position with respect to the one or more passageways 210. In exemplary embodiments, the one or more shutter elements 310 may include one or more piston-like or piston-shaped structures 312 each having a head portion 314 coupled to a shaft 316. The one or more shutter elements 310 are disposed at least partially within the one or more passageways 210. In exemplary embodiments, at least a portion of the head portion 314 is configured having a geometry complementary to at least a portion of the respective passageway 210 such that the head portion 314 nests or seats against at least a portion of the passageway sidewall 240 of the passageway 210. Thus, in FIG. 7, the shutter assembly 302 is depicted in a closed position such that the respective passageways 210 are blocked or obstructed to substantially prevent the powder build material 114 from passing through the passageways 210. In exemplary embodiments, the one or more shutter elements 310 may be coupled together so that the one or more shutter elements 310 are movable together as a unit. In exemplary embodiments, the shutter assembly 302 is coupled to an actuator 320 such that actuation of the actuator 320 causes movement of the one or more shutter elements 310 in the directions indicated by an arrow 322. Actuation or control of the actuator 320 may be automatically controlled, such as by the controller 188 or by another computing system configured similar to exemplary computing devices of the computing system 500 described below with reference to FIG. 10. Additionally or alternatively, it should be understood that the build plate 140 may be configured to move with respect to a stationary shutter assembly 302 to cause the shutter assembly 302 to be in an open or closed position with respect to the one or more passageways 210.

In exemplary embodiments, similar to the de-powdering system 150 (FIGS. 1-5), the de-powdering system 300 includes one or more screens 330. In exemplary embodiments, the one or more screens 330 include one or more screen elements 332 that at least partially extend between or around the one or more shutter elements 310 such that the one or more screen elements 332 are located in regions adjacent the one or more shutter elements 310 that remain uncovered by the one or more shutter elements 310. The one or more screen elements 332 may be a mesh structure or a wall structure containing a plurality of opening or apertures to enable the powder build material 114 to flow through the one or more screen elements 332 and to one or more passageways 210 while preventing the one or more objects 130 from entering or passing through the passageways 210. In exemplary embodiments, the one or more screen elements 332 may be coupled to or form part of the shutter assembly 302 such that vertical movement of the shutter assembly 302 also results in vertical movement of the one or more screen elements 330 with the one or more shutter elements 310 as a unit.

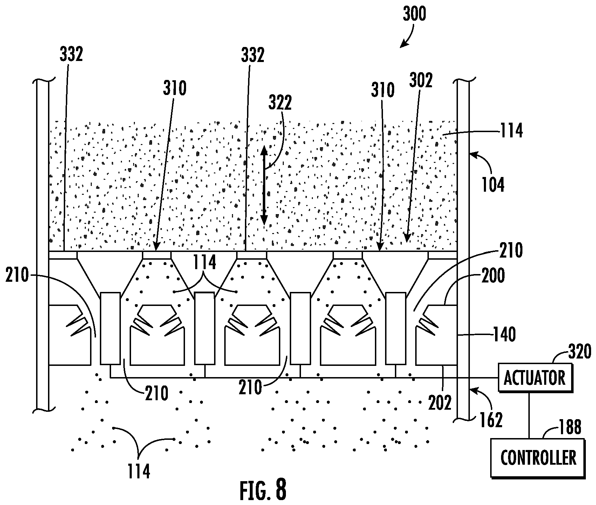

FIG. 8 is a schematic diagram depicting an enlarged view of a portion of the de-powdering system 300 of FIG. 7 according to exemplary embodiments of the present disclosure. In FIG. 8, the shutter assembly 302 is depicted in an open position. Thus, when the shutter assembly 302 is an open position, the shutter elements 310 are positioned such that the head portion 314 of the piston-like structures 312 are in an elevated position with respect to the build plate 140, which enables the powder build material 114 to pass through the one or more screen elements 332 and through the one or more passageways 210 into the hopper 162.

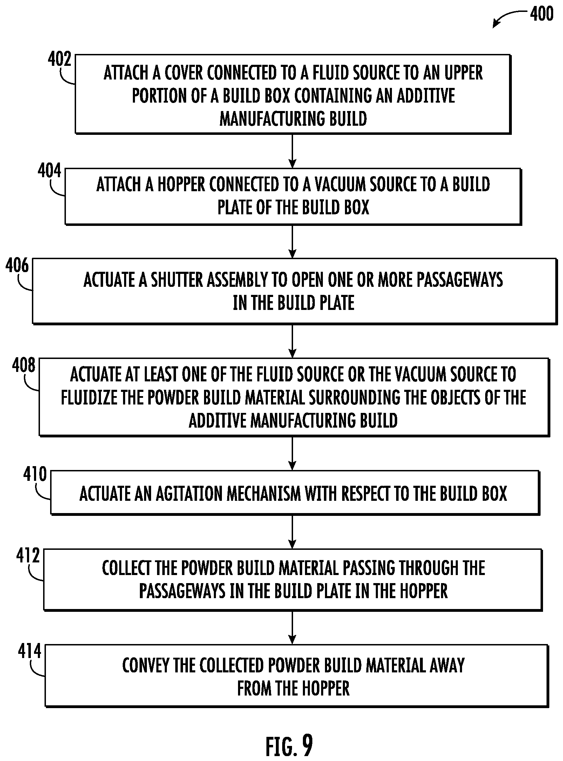

Referring to FIG. 9, a block diagram depicting an exemplary automated method 400 of de-powdering the additive manufacturing build 110 is provided. The method 400 begins at 402, where the cover 160 fluidically coupled to the fluid source 172 is attached to the upper portion 166 of the build box 104. At 404, the hopper 162 fluidically coupled to the vacuum source 186 is attached to the build plate 140. At 406, the shutter assembly 222 or 262 is actuated to open one or more passageways 210 in the build plate 140. At 408, one or more of the fluid source 172 or the vacuum source 186 is actuated to fluidize the powder build material 114 surrounding the one or more objects 130. At 410, the agitation mechanism 248 is actuated with respect to the build box to induce vibrations into the additive manufacturing build 110. At 412, the powder build material 114 separated from the one or more objects 130 is collected by the hopper 162. At 414, the collected powder build material 114 is conveyed away from the hopper 162.

FIG. 10 provides an example computing system 500 according to example embodiments of the present disclosure. The computing devices or elements described herein, such as the controller 188, may include various components and perform various functions of the computing system 500 described below, for example.

As shown in FIG. 10, the computing system 500 can include one or more computing device(s) 502. The computing device(s) 502 can include one or more processor(s) 502A and one or more memory device(s) 502B. The one or more processor(s) 502A can include any suitable processing device, such as a microprocessor, microcontroller, integrated circuit, logic device, and/or other suitable processing device. The one or more memory device(s) 502B can include one or more computer-executable or computer-readable media, including, but not limited to, non-transitory computer-readable media, RAM, ROM, hard drives, flash drives, and/or other memory devices.

The one or more memory device(s) 502B can store information accessible by the one or more processor(s) 502A, including computer-readable instructions 502C that can be executed by the one or more processor(s) 502A. The instructions 502C can be any set of instructions that when executed by the one or more processor(s) 502A, cause the one or more processor(s) 502A to perform operations. In some embodiments, the instructions 502C can be executed by the one or more processor(s) 502A to cause the one or more processor(s) 502A to perform operations, such as any of the operations and functions for which the computing system 500 and/or the computing device(s) 502 are configured, such as controlling operation or actuation of the fluid source 172, the vacuum source 186, the shutter assemblies 222 or 262, the fluid source 244, the agitation mechanisms 248, or other components of the automated de-powdering systems 150, 260, or 300. The instructions 502C can be software written in any suitable programming language or can be implemented in hardware. Additionally, and/or alternatively, the instructions 502C can be executed in logically and/or virtually separate threads on processor(s) 502A. The memory device(s) 502B can further store data 502D that can be accessed by the processor(s) 502A. For example, the data 502D can include models, lookup tables, databases, etc.

The computing device(s) 502 can also include a network interface 502E used to communicate, for example, with the other components of the computing system 500 (e.g., via a communication network). The network interface 502E can include any suitable components for interfacing with one or more network(s), including for example, transmitters, receivers, ports, controllers, antennas, and/or other suitable components. One or more devices can be configured to receive one or more commands from the computing device(s) 502 or provide one or more commands to the computing device(s) 502.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Thus, embodiments of the present disclosure provide an apparatus and technique for automatic de-powdering of additively manufactured objects. Embodiments of the present disclosure provide de-powdering additively manufactured objects within the build box used to form the objects. Embodiments of the present disclosure utilize a pressurized atmosphere within the build box during the de-powdering process and utilize one or more techniques to separate unbound powder build material from the additively manufactured objects such as introducing a fluid injection through the build plate, actuating one or more vibration mechanisms, and using a pressurized gas flow from above the additive manufacture build to force the unbound powder build material through passageways formed in the build plate. Embodiments of the present disclosure may also utilize a sacrificial support system formed during the printing process to support and stabilize the additively manufactured objects during powder separation and removal.

Further aspects of the presently disclosed subject matter are provided by the following clauses:

An automated de-powdering system, comprising: a build box defined by a build plate and a plurality of sidewalls, the build plate and the plurality of sidewalls defining a build chamber configured to contain an additive manufacturing build, the additive manufacturing build comprising one or more objects disposed within a powder build material, wherein the build plate includes a top side and a bottom side, the bottom side opposite the top side, wherein the build plate includes at least one passageway extending from the top side to the bottom side, wherein the at least one passageway is defined by at least one passageway sidewall, and wherein the at least one passageway sidewall includes at least one nozzle to direct a fluid into the build chamber to separate the powder build material from the one or more objects; and at least one fluid source fluidically coupled to the at least one nozzle, the at least one fluid source actuatable to supply the fluid to the at least one nozzle.

The automated de-powdering system of the preceding clause, wherein the at least one passageway comprises at least one funnel-shaped passageway.

The automated de-powdering system of any preceding clause, further comprising a cover disposed over the build chamber, the cover fluidically coupled to the at least one fluid source, the at least one fluid source actuatable to supply the fluid to the build chamber via the cover.

The automated de-powdering system of any preceding clause, further comprising at least one screen extending over the at least one passageway.

The automated de-powdering system of any preceding clause, further comprising a hopper disposed below the build plate, the hopper positioned to collect unbound powder build material passing through the at least one passageway.

The automated de-powdering system of any preceding clause, further comprising a transport mechanism actuatable to convey the unbound powder material collected by the hopper away from the hopper.

The automated de-powdering system of any preceding clause, further comprising a shutter assembly movable between an open position and a closed position with respect to the at least one passageway.

The automated de-powdering system of any preceding clause, wherein the shutter assembly is disposed on the bottom side of the build plate.

The automated de-powdering system of any preceding clause, wherein the shutter assembly is disposed on the top side of the build plate.

The automated de-powdering system of any preceding clause, wherein the shutter assembly is disposed at least partially within the at least one passageway.

The automated de-powdering system of any preceding clause, wherein the shutter assembly includes at least one piston-shaped structure disposed at least partially within the at least one passageway.

The automated de-powdering system of any preceding clause, wherein the at least one piston-shaped structure includes a head portion configured to seat against the at least one passageway.

The automated de-powdering system of any preceding clause, wherein the head portion has a geometry complementary to at least a portion of the at least one passageway.

The automated de-powdering system of any preceding clause, wherein the at least one screen is coupled to the shutter assembly.

The automated de-powdering system of any preceding clause, further comprising at least one fluid line fluidically coupled to the at least one nozzle, wherein the at least one fluid line comprises at least one trap portion.

The automated de-powdering system of any preceding clause, wherein the build plate comprises at least one fluid line fluidically coupled to the at least one nozzle, wherein the at least one fluid line comprises at least one trap portion formed within the build plate.

The automated de-powdering system of any preceding clause, wherein the additive manufacturing build includes one or more objects suspended within a powder build material, and wherein the additive manufacturing build includes at least one sacrificial support connected to at least one of the one or more objects.

An automated de-powdering system, comprising: a build box defined by a build plate and a plurality of sidewalls, the build plate and the plurality of sidewalls defining a build chamber configured to contain an additive manufacturing build, wherein the build plate includes a top side and a bottom side, the bottom side opposite the top side, wherein the build plate includes at least one funnel-shaped passageway extending from the top side to the bottom side; at least one fluid source; and a cover fluidically coupled to the at least one fluid source, the cover disposed over the build chamber, wherein the at least one fluid source is actuatable to deliver a pressurized fluid into the build chamber via the cover.

The automated de-powdering system of any preceding clause, further comprising at least one screen extending over the at least one funnel-shaped passageway.

The automated de-powdering system of any preceding clause, further comprising a shutter assembly movable between an open position and a closed position with respect to the at least one funnel-shaped passageway.

The automated de-powdering system of any preceding clause, further comprising at least one vibration mechanism, the at least one vibration mechanism actuatable to induce vibrations to the build chamber.

The automated de-powdering system of any preceding clause, wherein the shutter assembly includes at least one shutter element disposed proximate the bottom side of the build plate.

The automated de-powdering system of any preceding clause wherein the at least one funnel-shaped passageway includes at least one nozzle disposed between the top side and the bottom side of the build plate.

An automated de-powdering system, comprising: a build box defined by a build plate and a plurality of sidewalls, the build plate and the plurality of sidewalls defining a build chamber configured to contain an additive manufacturing build, the additive manufacturing build including one or more objects suspended within a powder build material, and wherein the build plate includes a top side and a bottom side, the bottom side opposite the top side, and wherein the build plate includes at least one passageway extending from the top side to the bottom side; at least one fluid line disposed within the build plate, the at least one fluid line fluidically coupled to the at least one passageway, wherein the at least one fluid line comprises at least one trap portion; and at least one fluid source fluidically coupled to the at least one fluid line, wherein the at least one fluid source is actuatable to deliver a pressurized fluid into the build chamber via the at least one fluid line and the at least one passageway.

The automated de-powdering system of any preceding clause, further comprising a shutter assembly movable between an open position and a closed position with respect to the at least one passageway.

The automated de-powdering system of any preceding clause, further comprising at least one screen positioned with respect to the at least one passageway to prevent the one or more objects from passing through the at least one passageway.

The automated de-powdering system of any preceding clause, further comprising a cover disposed over the build chamber, the cover fluidically coupled to the at least one fluid source, the at least one fluid source actuatable to supply a fluid to the build chamber via the cover.

An automated de-powdering method, comprising: securing a cover to a build box, the cover fluidically coupled to a fluid source, the build box containing an additive manufacturing build with one or more objects disposed within a powder build material; securing a hopper to a build plate of the build box, the hopper fluidically coupled to a vacuum source, the build plate having one or more passageways extending through the build plate; and actuating at least one of the fluid source or the vacuum source to separate the powder build material from the one or more objects, the powder build material separated from the one or more objects leaving the build box via the one or more passageways.

The automated de-powdering method of the preceding clause, further comprising actuating a shutter assembly to open the one or more passageways.

The automated de-powdering method of any preceding clause, further comprising actuating at least one agitation mechanism with respect to the build box to induce vibrations into the additive manufacturing build.

The automated de-powdering method of any preceding clause, further comprising collecting, via the hopper, the powder build material separated from the one or more objects.

The automated de-powdering method of any preceding clause, further comprising conveying the powder build material collected by the hopper away from the hopper.

An automated de-powdering system, comprising: a build box defined by a build plate and a plurality of sidewalls, the build plate and the plurality of sidewalls defining a build chamber configured to contain an additive manufacturing build, the additive manufacturing build including one or more objects suspended within a powder build material, and wherein the build plate includes a top side and a bottom side, the bottom side opposite the top side, and wherein the build plate includes at least one passageway extending from the top side to the bottom side; a cover disposed over the build chamber, the cover configured to maintain the additive manufacturing build in a controlled environment; a shutter assembly movable with respect to the at least one passageway to place the at least one passageway in either an open position or a closed position; and at least one agitation mechanism actuatable to separate at least a portion of the powder build material from the one or more objects, one or more objects, the portion of the powder build material separated from the one or more objects passing through the at least one passage way when the at least one passageway is in the open position.

The automated de-powdering system of any preceding clause, wherein the shutter assembly extends at least partially into the at least one passageway.

The automated de-powdering system of any preceding clause, further comprising at least one screen element positioned with respect to the at least one passageway to prevent the one or more objects from passing through the at least one passageway.

The automated de-powdering system of any preceding clause, further comprising a cover disposed over the build chamber, the cover fluidically coupled to the at least one fluid source, the at least one fluid source actuatable to supply a fluid to the build chamber via the cover.

An automated de-powdering system, comprising: a build box defined by a build plate and a plurality of sidewalls, the build plate and the plurality of sidewalls defining a build chamber configured to contain an additive manufacturing build, the additive manufacturing build including one or more objects suspended within a powder build material, and wherein the build plate includes a top side and a bottom side, the bottom side opposite the top side, and wherein the build plate includes at least one passageway extending from the top side to the bottom side; a cover couplable to the build box, the cover fluidically couplable to a fluid source; a hopper couplable to the build plate, the hopper fluidically coupled to a vacuum source; and a controller configured to actuate at least one of the fluid source or the vacuum source to separate at least a portion of the powder build material from the one or more objects, the portion of the powder build material separated from the one or more objects leaving the build box via the at least one passageway into the hopper.

The automated de-powdering system of any preceding clause, further comprising a shutter assembly, the controller configured to actuate the shutter assembly to place the at least one passageway in either an open position or a closed position.

The automated de-powdering system of any preceding clause, further comprising at least one screen element positioned with respect to the at least one passageway to prevent the one or more objects from passing through the at least one passageway.

The automated de-powdering system of any preceding clause, further comprising at least one agitation mechanism, wherein the controller is configured to actuate the at least one agitation mechanism with respect to the build box to induce vibrations into the additive manufacturing build.

This written description uses examples to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. The scope of the claims encompasses such other examples that include structural elements that do not differ from the literal language of the claims or that have insubstantial differences from the literal languages of the claims.

## Claims

1. An automated de-powdering system [150, 260, or 300], comprising:
a build box [104] defined by a build plate [140] and a plurality of sidewalls [106], the build plate [140] and the plurality of sidewalls [106] defining a build chamber [108] configured to contain an additive manufacturing build [110], the additive manufacturing build [110] comprising one or more objects [130] disposed within a powder build material [114], wherein the build plate [140] includes a top side [200] and a bottom side [202], the bottom side [202] opposite the top side [200], wherein the build plate [140] includes at least one passageway [210] extending from the top side [200] to the bottom side [202], wherein the at least one passageway [210] is defined by at least one passageway sidewall [240], and wherein the at least one passageway sidewall [240] includes at least one nozzle [242] to direct a fluid into the build chamber [108] to separate at least a portion of the powder build material [114] from the one or more objects [130]; and
at least one fluid source [244] fluidically coupled to the at least one nozzle [242], the at least one fluid source [244] actuatable to supply the fluid to the at least one nozzle [242].

2. The automated de-powdering system [150, 260, or 300] of claim 1, wherein the at least one passageway [210] comprises at least one funnel-shaped passageway [210].

3. The automated de-powdering system [150, 260, or 300] of claim 1, further comprising a cover [160] disposed over the build chamber [108], the cover [160] fluidically coupled to the at least one fluid source [244], the at least one fluid source [244] actuatable to supply the fluid to the build chamber [108] via the cover [160].

4. The automated de-powdering system [150, 260, or 300] of claim 1, further comprising at least one screen [220, 330] extending over the at least one passageway [210].

5. The automated de-powdering system [150, 260, or 300] of claim 1, further comprising a hopper [162] disposed below the build plate [140], the hopper [162] positioned to collect the portion of the powder build material [114] passing through the at least one passageway [210].

6. The automated de-powdering system [150, 260, or 300] of claim 5, further comprising a transport mechanism actuatable to convey the portion of the powder build material [114] collected by the hopper [162] away from the hopper [162].

7. The automated de-powdering system [150, 260, or 300] of claim 1, further comprising a shutter assembly [302] movable between an open position and a closed position with respect to the at least one passageway [210].

8. The automated de-powdering system [150, 260, or 300] of claim 7, wherein the shutter assembly [302] is disposed on the bottom side [202] of the build plate [140].

9. The automated de-powdering system [150, 260, or 300] of claim 1, further comprising at least one fluid line fluidically coupled to the at least one nozzle [242], wherein the at least one fluid line comprises at least one trap portion.

10. The automated de-powdering system [150, 260, or 300] of claim 1, wherein the build plate [140] comprises at least one fluid line fluidically coupled to the at least one nozzle [242], wherein the at least one fluid line comprises at least one trap portion formed within the build plate [140].

11. An automated de-powdering method, comprising:
securing a cover [160] to a build box [104], the cover [160] fluidically coupled to a fluid source [244], the build box [104] containing an additive manufacturing build [110] with one or more objects [130] disposed within a powder build material [114];
securing a hopper [162] to a build plate [140] of the build box [104], the hopper [162] fluidically coupled to a vacuum source, the build plate [140] having one or more passageways [210] extending through the build plate [140]; and
actuating at least one of the fluid source [244] or the vacuum source to separate at least a portion of the powder build material [114] from the one or more objects [130], the portion of the powder build material [114] separated from the one or more objects [130] leaving the build box [104] via the one or more passageways [210] into the hopper [162].

12. The automated de-powdering method of claim 11, further comprising actuating a shutter assembly [302] to open the one or more passageways [210].

13. The automated de-powdering method of claim 11, further comprising actuating at least one agitation mechanism with respect to the build box [104] to induce vibrations into the additive manufacturing build [110].

14. The automated de-powdering method of claim 11, further comprising collecting, via the hopper [162], the portion of the powder build material [114] separated from the one or more objects [130].

15. An automated de-powdering system [150, 260, or 300], comprising:
a build box [104] defined by a build plate [140] and a plurality of sidewalls [106], the build plate [140] and the plurality of sidewalls [106] defining a build chamber [108] configured to contain an additive manufacturing build [110], the additive manufacturing build [110] including one or more objects [130] suspended within a powder build material [114], and wherein the build plate [140] includes a top side [200] and a bottom side [202], the bottom side [202] opposite the top side [200], and wherein the build plate [140] includes at least one passageway [210] extending from the top side [200] to the bottom side [202];
a cover [160] couplable to the build box [104], the cover [160] fluidically couplable to a fluid source [244];
a hopper [162] couplable to the build plate [140], the hopper [162] fluidically coupled to a vacuum source; and
a controller configured to actuate at least one of the fluid source [244] or the vacuum source to separate at least a portion of the powder build material [114] from the one or more objects [130], the portion of the powder build material [114] separated from the one or more objects [130] leaving the build box [104] via the at least one passageway [210] into the hopper [162].
